# EUROPÄISCHE PATENTSCHRIFT

(11) **EP 2 558 330 B1**
(45) Veröffentlichungstag und Bekanntmachung des Hinweises auf die Patenterteilung: **16.08.2017**
(21) Anmeldenummer: 11711281.3
(22) Anmeldetag: 24.03.2011
(51) Int. Cl.: B60M 1/28

(54) **VERFAHREN ZUR ERRICHTUNG EINER ELEKTRISCHEN OBERLEITUNG**
METHOD FOR ERECTING AN ELECTRICAL OVERHEAD LINE
PROCÉDÉ POUR ÉRIGER UNE CATÉNAIRE ÉLECTRIQUE

(30) Priorität: 16.04.2010 AT 6202010
(43) Veröffentlichungstag der Anmeldung: 20.02.2013
(73) Patentinhaber: Plasser & Theurer Export von Bahnbaumaschinen Gesellschaft m.b.H., 1010 Wien (AT)
(72) Erfinder: THEURER, Josef, A-1010 Wien (AT); FLETZER, Robert, A-2331 Vösendorf (AT)
(86) Internationale Anmeldenummer: PCT/EP2011/001463
(87) Internationale Veröffentlichungsnummer: WO 2011/141089

(56) Entgegenhaltungen:
- EP-A2- 0 801 022
- DE-A1- 4 414 515
- FELS W: "FAHRLEITUNGSBAUFAHRZEUGE", ELEKTRISCHE BAHNEN, OLDENBOURG INDUSTRIEVERLAG, MUNCHEN, DE, Bd. 96, Nr. 12, 1. Dezember 1998 (1998-12-01), Seiten 370-375, XP000790071, ISSN: 0013-5437
- GRUBER L ET AL: "NEUE METHODEN ZUM OBERLEITUNGSUMBAU UND-NEUBAU", ELEKTRISCHE BAHNEN, OLDENBOURG INDUSTRIEVERLAG, MUNCHEN, DE, Bd. 90, Nr. 3, 1. März 1992 (1992-03-01), Seiten 96-100, XP000264452, ISSN: 0013-5437
- WENTY R: "Maschinentechnologie für Fahrleitungssysteme", ELEKTRISCHE BAHNEN, OLDENBOURG INDUSTRIEVERLAG, MUNCHEN, DE, Bd. 108, Nr. 3, 1. März 2010 (2010-03-01), Seiten 112-118, XP001553435, ISSN: 0013-5437

## Beschreibung

Die Erfindung betrifft ein Verfahren zur Errichtung einer elektrischen Oberleitung innerhalb einer aus einer Anzahl von durch ein Fahrzeug erfassbaren und auf einem Transportfahrzeug gelagerten Fahrleitungsmasten zusammengesetzten Sektion, sowie dem Einsatz einer Verlegemaschine zur Montage eines Fahrdrahtes und eines Tragseiles.

Aus dem Fachartikel "Fahrleitungsbaufahrzeuge" (von W. Fels in: Elektrische Bahnen, Oldenbourg Industrieverlag München, DE, Bd. 96, Nr. 12, 1.12.1998, St. 370-375) sind sowohl ein Fahrzeug zum Erfassen von auf Transportfahrzeugen gelagerten Fahrleitungsmasten als auch eine Verlegemaschine zur Montage von Fahrdraht und Tragseil einer Oberleitung bekannt.

Aus DE 44 14 515 A1 ist ein spezielles Verfahren zum Verankern von Pfosten im Boden bekannt.

EP 0 801 022 A2 zeigt eine gleisverfahrbare Maschine mit zwei Drehkränen zum Erfassen von auf Ladewaggons befindlichen Fahrleitungsmasten.

Die Fachartikel "Neue Methoden zum Oberleitungsumbau und -neubau" (von L. Gruber u. G. Selzer in: Elektrische Bahnen, Oldenbourg Industrieverlag München, DE, Bd. 90, Nr. 3, 1.3.1992, St. 96-100) und "Maschinentechnologie für Fahrleitungssysteme" (von R. Wenty in: Elektrische Bahnen, Oldenbourg Industrieverlag München, DE, Bd. 108, Nr. 3, 1.3.2010, St. 112-118) werden verschiedene Systeme bzw. Maschinen zum Verlegen und Umbau von Oberleitungen beschrieben.

Durch EP 0459538 oder EP 0459537 ist bekannt, Fahrdraht und Tragseil einer elektrischen Oberleitung unter kontinuierlicher Vorfahrt einer Verlegemaschine mit einer endgültigen Verlegespannung zu verlegen.

Die Aufgabe der vorliegenden Erfindung liegt nun in der Schaffung eines Verfahrens der eingangs genannten Art, mit dem eine besonders effiziente Errichtung einer Fahrleitungssektion möglich ist.

Diese Aufgabe wird erfindungsgemäß mit einem Verfahren der gattungsgemäßen Art durch die im Patentanspruch angeführten Verfahrensschritte gelöst.

Durch diese Kombination von Verfahrensschritten ist es möglich, eine komplette Sektion einer Oberleitung mit einem Minimum an Gleisbesetzung fertig zu stellen. Dadurch ist es möglich, die Montage der Oberleitung so rasch wie möglich durchzuführen und weiterhin zwischen den Gleissperren einen Gleisverkehr aufrecht zu erhalten.

Weitere Vorteile der Erfindung ergeben sich aus der Zeichnungsbeschreibung.

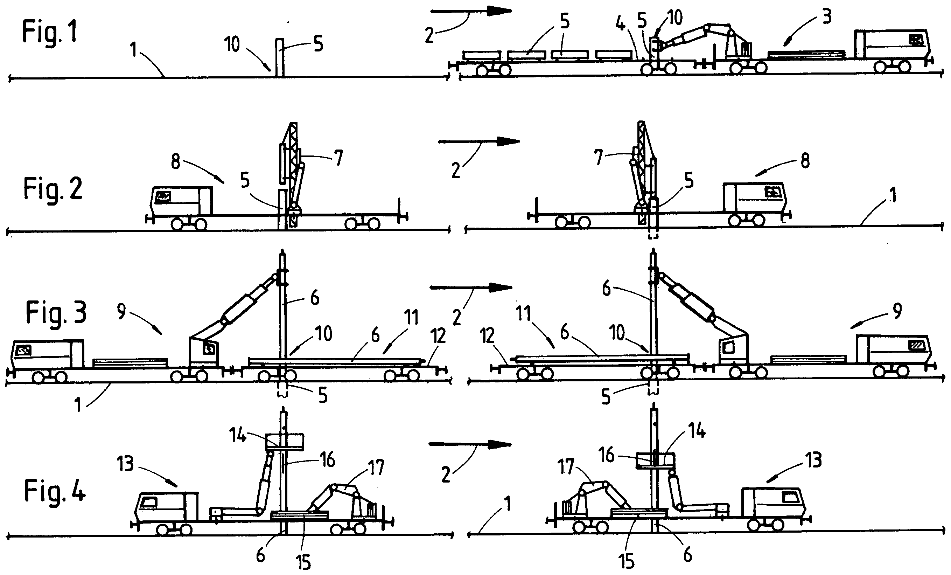

Im Folgenden wird die Erfindung anhand von in der Zeichnung dargestellten Ausführungsbeispielen näher beschrieben, wobei die Fig. 1 bis 7 jeweils einen Verfahrensabschnitt mit vereinfacht dargestellten Maschinen zeigen.

In Fig. 1 ist ein auf einem Gleis 1 in einer Arbeitsrichtung 2 verfahrbarer Arbeitswagen 3 zum Transport von auf einer Ladefläche 4 gelagerten Fundamentkörpern 5 ersichtlich. Diese werden mit Hilfe eines Kranes seitlich neben dem Gleis 1 an für eine Errichtung eines Fahrleitungsmastes 6 (s. Fig. 3) vorgesehenen Baustellen 10 mit Hilfe einer mit einem Rammgerät 7 ausgestatteten Rammmaschine 8 (s. Fig. 2) abgelegt.

Wie in Fig. 2 ersichtlich, sind zwei parallel arbeitende Rammmaschinen 8 vorgesehen, die nach Beendigung des Rammvorganges gemeinsam zur jeweils übernächsten Baustelle 10 vorgefahren werden.

Wie in Fig. 3 dargestellt, sind insgesamt zwei Fahrzeuge 9 für die Verbindung der Fahrleitungsmasten 6 mit dem jeweiligen Fundamentkörper 5 vorgesehen. Diese beiden Fahrzeuge 9 arbeiten ebenfalls parallel und werden nach Fixierung des Fahrleitungsmastes 6 gemeinsam zur jeweils übernächsten Baustellen 10 vorgefahren. Jedem Fahrzeug 9 ist ein Transportfahrzeug 11 mit einer Ladefläche 12 zur Lagerung einer Anzahl von Fahrleitungsmasten 6 zugeordnet.

Gemäß Fig. 4 sind zwei Montagefahrzeuge 13 vorgesehen, die jeweils mit einer Hubarbeitsbühne 14, einer Ladefläche 15 zum Transport von Auslegern 16 und einem Kran 17 ausgestattet sind.

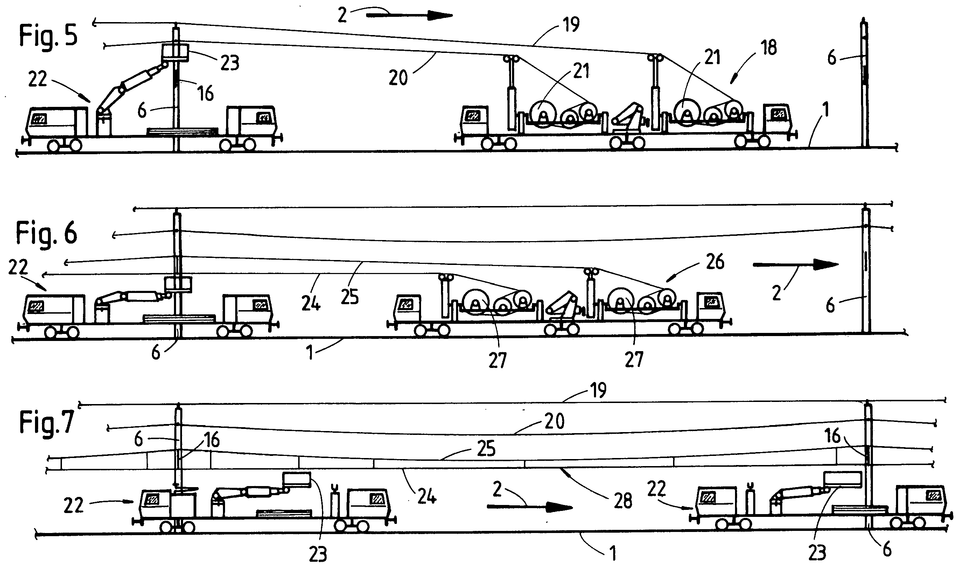

In Fig. 5 ist eine erste Verlegemaschine 18 dargestellt, die für eine kontinuierliche Verlegung eines Feeders 19 sowie einer Rückleitung 20 in der Arbeitsrichtung 2 auf dem Gleis 1 verfahrbar ist. Feeder 19 und Rückleitung 20 werden jeweils von einer Vorratsrolle 21 abgewickelt. Bezüglich der Arbeitsrichtung 2 hinter der ersten Verlegemaschine 18 ist ein weiteres Montagefahrzeug 22 mit einer Hubarbeitsbühne 23 vorgesehen.

Zur Verlegung eines Fahrdrahtes 24 und eines Tragseiles 25 ist eine in Fig. 6 ersichtliche zweite Verlegemaschine 26 vorgesehen. Dabei werden Fahrdraht 24 und Tragseil 25 kontinuierlich von entsprechenden Vorratsrollen 27 abgewickelt und unter vorgeschriebener endgültiger Zugspannung verlegt. Nachfolgend sind drei weitere Montagefahrzeuge 22 (s. Fig. 6, 7) mit Hubarbeitsbühnen 23 vorgesehen, um Fahrdraht 24 und Tragseil 25 mit den Auslegern 16 zur Bildung einer elektrischen Oberleitung 28 zu verbinden.

Im folgenden wird nun das erfindungsgemäße Verfahren näher beschrieben. Im Rahmen einer ersten Sperre des Gleises 1 wird bei jeder für die Montage eines Fahrleitungsmastes 6 vorgesehenen Baustelle 10 ein Fundamentkörper 5 abgeladen. Dies erfolgt derart, dass der Fundamentkörper 5 ohne zusätzlichen Aufwand vom nachfolgenden Rammgerät 7 eingerammt werden kann.

Parallel dazu werden die beiden Rammmaschinen 8 eingesetzt, die jeweils nur jede zweite Baustelle bzw. Mastposition 10 anfahren, um den bereitgestellten Fundamentkörper 5 mit Hilfe des Rammgerätes 7 in das Fundament zu rammen.

In einer zweiten Gleissperre werden die beiden Fahrzeuge 9 für die Montage des Fahrleitungsmastes 6 am eingerammten Fundamentkörper 5 eingesetzt. Dabei wird wiederum nur jede zweite Mastposition 10 angefahren.

Die beiden Montagefahrzeuge 13 können in der zweiten bzw. in einer dritten Gleissperre eingesetzt werden, um die Ausleger 16 zu montieren.

In einer Gleissperre wird unter kontinuierlicher Vorfahrt der ersten Verlegemaschine 18 der Feeder 19 sowie die Rückleitung 20 mit den Fahrleitungsmasten 6 verbunden, wonach unter kontinuierlicher Vorfahrt der zweiten Verlegemaschine 26 eine Montage des Fahrdrahtes 24 und des Tragseiles 25 erfolgt. Am Ende einer Sektion werden schließlich Fahrdraht 24 und Tragseil 25 mit einem nicht näher dargestellten Radspannwerk verbunden.

## Patentansprüche

1. Verfahren zur Errichtung einer elektrischen Oberleitung (28) innerhalb einer aus einer Anzahl von durch ein Fahrzeug (9) erfassbaren und auf einem Transportfahrzeug (11) gelagerten Fahrleitungsmasten (6) zusammen gesetzten Sektion, sowie dem Einsatz einer Verlegemaschine (26) zur Montage eines Fahrdrahtes (24) und eines Tragseiles (25), **gekennzeichnet durch** folgende Verfahrensschritte:
a) in einer ersten Gleissperre werden Fundamentkörper (5) für Fahrleitungsmasten (6) seitlich neben einem Gleis (1) an den für eine Errichtung eines Fahrleitungsmastes (6) vorgesehenen Mastposition (10) vorgelagert und eingerammt,
b) in einer zweiten Gleissperre werden die Fahrleitungsmasten (6) mit den eingerammten Fundamentkörpern (5) verbunden,
c) in einer dritten Gleissperre wird unter kontinuierlicher Vorfahrt einer ersten Verlegemaschine (18) ein Feeder (19) sowie eine Rückleitung (20) mit den Fahrleitungsmasten (6) verbunden, wonach unter kontinuierlicher Vorfahrt der zweiten Verlegemaschine (26) die Montage des Fahrdrahtes (24) und des Tragseiles (25) erfolgt.

## Claims

1. A method of erecting an electrical catenary (28) within a section consisting of a number of catenary masts (6) which are stored on a transport wagon (11) and designed to be picked up by a vehicle (9), and of using an installation machine (26) for installing a contact wire (24) and a carrying cable (25), **characterized by** the following method steps:
a) in a first track possession, foundation bodies (5) for catenary masts (6) are deposited laterally next to a track (1) at the mast positions (10) intended for assemblage of a catenary mast (6), and rammed in,
b) in a second track possession, the catenary masts (6) are connected to the rammed-in foundation bodies (5),
c) in a third track possession, during continuous advance of a first installation machine (18), a feeder (19) as well as a return line (20) are connected to the catenary masts (6), after which - during continuous advance of the second installation machine (26) - the contact wire (24) and the carrying cable (25) are installed.

## Revendications

1. Procédé d'érection d'un fil aérien électrique (28) au sein d'une section composée d'un certain nombre de poteaux de ligne de contact (6) pouvant être détectés par un véhicule (9) et logés sur un véhicule de transport (11), ainsi que d'utilisation d'une machine de pose (26) pour le montage d'un fil de contact (24) et d'un câble porteur (25), **caractérisé par** les étapes de procédé suivantes :
a) des corps de fondation (5) pour poteaux de ligne de contact (6) sont logés en amont latéralement à côté d'une voie ferrée (1) à la position de poteau (10) prévue pour une érection d'un poteau de ligne de contact (6) et enfoncés dans un premier taquet d'arrêt,
b) les poteaux de ligne de contact (6) sont reliés aux corps de fondation enfoncés (5) dans un deuxième taquet d'arrêt,
c) une ligne d'alimentation (19) ainsi qu'un retour de courant (20) sont reliés aux poteaux de ligne de contact (6) dans un troisième taquet d'arrêt dans le cadre de l'avance continue d'une première machine de pose (18), après quoi le montage du fil de contact (24) et du câble porteur (25) s'effectue dans le cadre de l'avance continue de la seconde machine de pose (26).
